# EUROPÄISCHE PATENTSCHRIFT

(11) **EP 1 834 693 B1**
(45) Veröffentlichungstag und Bekanntmachung des Hinweises auf die Patenterteilung: **20.02.2008**
(21) Anmeldenummer: 06005263.6
(22) Anmeldetag: 15.03.2006
(51) Int. Cl.: B01J 19/32

(54) **Gewebepackung**
Structured packing of woven tissue
Corps de remplissage en tissu

(43) Veröffentlichungstag der Anmeldung: 19.09.2007
(73) Patentinhaber: T & R engineering GmbH, 59071 Hamm (DE); Basf AG, 67056 Ludwigshafen (DE)
(72) Erfinder: Tüshaus, Rüdiger, 46286 Dorsten (DE); Rössler, Peter, 59071 Hamm (DE); Friese, Thorsten, 68199 Mannheim (DE); Jödecke, Michael, 67240 Bobenheim-Roxheim (DE)
(74) Vertreter: Griepenstroh, Jörg

(56) Entgegenhaltungen:
- EP-A- 0 401 580
- EP-A- 0 416 649
- EP-A- 1 033 168
- DE-A1- 3 222 892
- PATENT ABSTRACTS OF JAPAN Bd. 1997, Nr. 11, 28. November 1997 (1997-11-28) & JP 09 177725 A (ERIITEKU KK), 11. Juli 1997 (1997-07-11)

## Beschreibung

Die vorliegende Erfindung beschreibt eine neuartige Drahtgewebepackung für eine Dampf-Flüssigkeits-Gegenstromkolonne.

In Trennkolonnen werden beispielsweise Destillationsverfahren durchgeführt, bei denen eine flüssige und eine dampfförmige Phase im Gegenstrom aneinander vorbeigeführt werden und ein Stoffaustausch zwischen den beiden Phasen stattfindet. Die verwendeten Stoffaustauschapparate nennt man z. B. Destillations- oder Rektifikationskolonnen. Der Stoffaustausch zwischen der Flüssigkeit und dem Dampf findet an der Grenzfläche der beiden Phasen statt. Um diese Grenzfläche zu erhalten und zu maximieren, werden trennwirksame. Einbauten in den Destillationskolonnen angebracht, wie z. B. Stoffaustauschböden, ungeordnete Füllkörper oder geordnete Packungen. Unter geordneten Packungen versteht man geometrische Anordnungen aus geformten Blech- und Gewebelagen, die fest im Stoffaustauschapparat angeordnet sind. Die Packungen zeichnen sich durch eine große spezifische Stoffaustauschfläche und gleichzeitig einen niedrigen Druckverlust aus. Durch die Geometrie der Packung können die spezifische Stoffaustauschfläche und der Druckverlust der Packung gezielt verändert werden und entsprechend der gewünschten Trennaufgabe angepasst werden.

Gewebepackungen sind bekannt und werden z. B. von, den Firmen Sulzen, Montz oder Koch-Glitsch produziert und vertrieben, bekannte Typen von Gewebepackungen der Firma Sulzer haben z. B. die Bezeichung BX oder CY. Bei diesen Gewebepackungen handelt es sich um Packungen aus gefalteten oder gewellten Lamellen von Gewebelagen, die an den Berührungspunkten verlötet oder verschraubt werden. Mitunter werden in die Gewebelagen zusätzlich Löcher gestanzt. Diese Gewebepackungen zeichnen sich durch hohe Trennleistungen bei gleichzeitig niedrigen spezifischen Druckverlusten aus. Bevorzugt werden Gewebepackungen bei Trennaufgaben im Hochvakuum und bei niedrigen Flüssigkeitsbelastungen eingesetzt, so z. B. bei der Destillation von ätherischen Ölen, von Fettsäuren oder Fettalkoholen. Die Gewebepackungen nutzen dabei die Kapillarwirkung aus, um eine gute Benetzung der Oberfläche mit den Einsatzstoffen zu erhalten. Nicht eingesetzt werden Gewebepackungen hingegen bei hohen Flüssigkeitsbelastungen. Aufgrund der Bauweise dieser Gewebepackungen und der damit verbundenen Flüssigkeitsführung ist die Gasbelastung der Packungen beschränkt, eine zu hohe Gasbelastung führt zum Fluten der Packungen und damit zum Ausfall des Stofftrennapparates. Man spricht in diesem Zusammenhang auch von der Kapazität der Packung. Ein Maß für die Kapazität einer Packung ist dabei der F-Faktor, der sich aus der Gasgeschwindigkeit im Apparat und der Wurzel der Gasdichte errechnet.

Die am Markt verfügbaren Gewebepackungen fluten in Abhängigkeit von den geometrischen Daten und den Prozessbedingungen, wie z. B. dem Druck im Apparat, bei F-Faktoren von 1,5 bis 2,5 Pa^{0,5}

Ein dreidimensional verformter, metallisierter Netzwerkstoff wird in der EP 0 401 580 A2 beschrieben. Der Netzwerkstoff kann als Füllkörper für Kolonnen, Katalysatoren und Katalysatorträgern zum Einsatz kommen. Die offenen Maschen der filigranartigen Netzstruktur des erfindungsgemäßen elektrisch leitfähigen Netzwerksstoffs sind ein charakteristisches geometrisches Merkmal dieses Materials. Sie werden von den durch Tiefziehen gedehnten Maschen eines flächenförmigen Textilmaterials, wie z.B. eines durch dehnbare Schlussfäden fixierten Kreuzgewebes, einer Raschelware, eines Gewebes oder insbesondere aber einer Maschenware gebildet. Der Netzwerkstoff soll auf einer Basisfläche in regelmäßiger Anordnung eine Vielzahl von Erhebungen und Vertiefungen aufweisen, in Form von Näpfchen mit runder oder eckiger Basisfläche. Es wird als günstig angesehen, wenn die Erhebungen oben ein flaches Plateau bzw. die Vertiefungen einen flachen Boden aufweisen, um eine gute Haftung zwischen dem Kernmaterial und den aufgebrachten Deckflächen zu ermöglichen.

In der EP 1 033 168 A2 wird eine aus einem Drahtgeflecht bestehende Packung beschrieben, bei welcher ein Stoffaustausch zwischen einzelnen Lagen der Packung vorgesehen ist. Die Lagen werden miteinander verbunden, so dass ein Stoffaustausch zwischen den Lagen erfolgen kann. Insgesamt ist die Gewebepackung dieser Bauart relativ komplex gestaltet, wodurch der fertigungstechnische Aufwand relativ hoch ist.

Eine weitere Bauform einer Kolonnenfüllung ist Gegenstand der EP 0 416 649 A2. Es kommen mehrere übereinander gestapelte Schichten zum Einsatz, wobei jede Schicht aus vertikalen Wänden aus nachgiebigem, metallischem, kapillaraktivem Material besteht, das durch ein Bewehrungsgeflecht aus starrem Material verstärkt ist. Die Wände sind zu schräg zur Vertikalen orientierten Wellen gestaltet. Als Nachteil bei dieser Art Kolonnenfüllung wird angesehen, dass die vertikalen Wände ein zusätzliches Bewehrungsgeflecht erfordern, um eine gewisse Gesamtsteifigkeit der Anordnung zu gewährleisten. Die Installation eines Bewehrungsgeflechts ist allerdings mit fertigungstechnischem Aufwand verbunden.

In der JP 09 177725 A wird eine Packungslage beschrieben, bei welcher Kontaktplatten zum Einsatz kommen, die beidseitig ausgestellte Distanzausprägungen aufweisen, wobei die gesamte Platte auf diese Art und Weise in beide Raumrichtungen gewellt ausgeführt ist. Nachteilig bei diesem Design ist, dass je nach Wellenlänge die Anzahl der Wellentäler und Wellenberge, die Anzahl der Distanzausprägungen in einer größeren Gewebepackung, relativ hoch sein kann. Daher ist auch die Anzahl der Kontaktpunkte zwischen zwei Gewebelagen unter Umständen sehr hoch. Wenn bei bestimmten Anwendungen der Stoffaustausch zwischen zwei Gewebelagen möglichst gering gehalten werden soll, ist diese Lösung auf Grund der Vielzahl der Berührungspunkte nicht optimal.

Auch in der DE 32 22 892 A2 wird eine Packung für eine Austauschkolonne beschrieben, die in diesem Fall aus parallel zueinander liegenden Blechen besteht, die einander nur stellenweise berühren und auf mindestens einer Seite eine Vielzahl von Vorsprüngen und/oder Eindrückungen aufweisen, deren Höhe bzw. Tiefe in der Größenordnung eines Millimeters liegen und deren Abstände voneinander in etwa dergleichen Größenordnung liegen. Derartige Bleche besitzen von ihrer Grundkonfiguration her eine geringere Oberfläche als ein engmaschiges Gewebe, mit der Folge, dass derartige Packungen oftmals nicht die gewünschten F-Faktoren aufweisen.

Bei der Entwicklung einer neuartigen Gewebepackung stellt sich daher die Aufgabe, die Kapazität der Packung zu erhöhen, ohne Verluste bei der Trennleistung oder einen Anstieg des Druckverlustes in Kauf zu nehmen.

Mit den Geometrien der auf dem Markt zur Verfügung stehenden Gewebepackungen sind diese Anforderungen nicht zu erreichen.

Bei der erfindungsgemäßen Packung handelt es sich um eine Gewebepackung. Dabei enthält die Gewebepackung einzelne Gewebelagen, die parallel angeordnet sind. Diese Gewebelagen können aus Metall oder Kunststoff angefertigt sein, es können auch flächige Materialien wie versinterte Metallfasern verwendet werden.

Die Gewebelagen werden erfindungsgemäß aus Drähten mit Durchmessern von 0,05 bis 1 mm, bevorzugt 0,08 bis 0,25 mm gefertigt. Die Drahtgewebe können aus einem Draht - monofil - oder aus mehreren verwundenen Drähten- oder aus Fasern - multifil - ausgeführt werden. Die Maschenweite, d.h. der Abstand nebeneinander liegender, paralleler Drähte der Gewebelagen liegt vorzugsweise bei unter 5 mm, insbesondere in einem Bereich unter 1 mm. Als Bindungsarten kommen insbesondere die drei Grundbindungsarten, d.h. die Leinenbindung, die Köperbindung und die Atlasbindung zum Einsatz, auch eine Tressenbindung mit oder ohne Wechsel, sowie Varianten der Bindungsarten sind möglich. Durch die Wahl der Gewebematerialien sowie die Wahl der Drähte, der Fasern, der Maschenweite und der Bindung kann die Oberfläche der Gewebelagen grob oder fein gestaltet werden.

Die Gewebelagen werden erfindungsgemäß durch Distanzausprägungen in einem definierten Abstand voneinander gehalten. Die Distanzausprägungen sind muldenartig ausgedrückte Vertiefungen in den Gewebelagen. Der Abstand der Gewebelagen und somit die Tiefe der Distanzausprägungen beträgt 1 bis 100 mm, bevorzugt 1 bis 50 mm, besonders bevorzugt 1 bis 20 mm. Die Distanzausprägungen halten den Abstand der Gewebelagen präzise und konstant. Der Abstand der Distanzausprägungen zueinander beträgt 10 bis 100 mm, bevorzugt 30 bis 50 mm. Die Distanzausprägungen benachbarter Gewebelagen sind zueinander versetzt angeordnet.

Je nach Anwendungsfall können eine oder mehrere zusätzliche kleine Ausprägungen auf den Distanzausprägungen vorhanden sein, die die Kontaktfläche der einzelnen Gewebelagen reduzieren können. Hierdurch kann im Einzelfall ein Queraustausch der Flüssigkeit auf den einzelnen Gewebelagen verringert werden. Die zusätzlichen kleinen Ausprägungen haben einen Durchmesser von 1 bis 10 mm, bevorzugt 1 bis 3 mm.

Die Gewebelagen können. Verdichtungen in Kette und/oder Schuss im Bereich der höchsten Punkte der Distanzaufprägungen aufweisen. Die Kettendichte und/oder Schussdichte, d.h. die Anzahl der Ketten-Filamente und/oder Schuss-Filamente je Maßeinheit, ist in diesem Fall nicht konstant, sondern weist Abweichungen auf, die zu den gewünschten verdichteten Bereichen führen. Kette und/oder Schuss können multifil ausgebildet sein. Die Gewebelagen sind bevorzugt durch Drähte oder Stifte, die bevorzugt im rechten Winkel zu den Gewebelagen laufen, miteinander verbunden.

Zusätzlich zu den Distanzausprägungen können sich Lenkausprägungen auf den Gewebelagen befinden. Die Lenkausprägungen unterscheiden sich von den Distanzausprägungen dadurch, dass sie die nächste Gewebelage nicht berühren. Die Lenkausprägungen dienen einer Modifikation der Oberfläche der Gewebelagen der Gewebepackung. Durch die Lenkausprägungen kann zum Einen die spezifische Oberfläche der Gewebepackung verändert werden, zum Anderen kann eine gezielte Strömungsführung der flüssigen Phase auf den Gewebelagen der Gewebepackung und der Dampfphase entlang der Gewebelagen erreicht werden. Je nach Anwendungsfall können eine oder mehrere Lenkausprägungen vorhanden sein. Die Lenkausprägungen können einen Abstand von 2 bis 90 mm, bevorzugt 2 bis 20 mm zueinander haben.

Die Distanz- und Lenkausprägungen werden mit Hilfe von Stanz- oder Presswerkzeugen in die Gewebelagen der Gewebepackung gedrückt. Dadurch können die Geometrien der Ausprägungen sehr vielseitig sein. Bevorzugte Geometrien sind Halbkugeln, Pyramiden, Zylinder oder Quader. Ebenfalls können glockenförmige oder stäbchenförmige Ausprägungen verwendet werden. Entsprechend der Geometrie der Ausprägungen variieren die Abmessungen der Ausprägungen. Ausprägungen mit runder Grundfläche, wie z. B. Halbkugeln, Zylinder oder Glocken, können über den Durchmesser der Grundfläche beschrieben werden. Diese Durchmesser können 2 bis 60 mm betragen, bevorzugt 2 bis 10 mm. Geometrien mit eckigen Grundflächen, wie z. B. Pyramiden oder Quader, können über die Kantenlänge der Grundfläche definiert werden. Die Kantenlängen dieser Ausprägungen betragen 2 bis 60 mm, bevorzugt 2 bis 10 mm. Die Tiefe, der Ausprägungen ergibt sich bei den Distanzausprägungen aus dem Abstand der Gewebelagen zueinander. Die Lenkausprägungen haben eine geringere Tiefe als die Distanzausprägungen und berühren die nächste Gewebelage nicht.

Die Distanz- und Lenkausprägungen können wechselseitig aus den Gewebelagen ausgedrückt werden.

Bevorzugt wird die erfindungsgemäße Packung in Stoffaustauschapparaten für Destillationen, Rektifikationen, Strippungen, Absorptionen und Desorptionen verwendet.

Im Betrieb wird die erfindungsgemäße Gewebepackung bevorzugt so eingesetzt, dass die Gewebelagen senkrecht orientiert sind und der Dampf dabei von unten parallel an den Gewebelagen vorbeiströmt. Der Dampf wird durch die Distanz- und die Lenkausprägungen entlang der Gewebelagen geleitet und dabei gut vermischt. Hierdurch wird gewährleistet, dass an der Grenzfläche zwischen Flüssigkeit und Dampf an der Oberfläche der Gewebelagen ein ständiger Austausch des Dampfes erfolgt und somit immer ein treibendes Konzentrationsgefälle zwischen den Phasen besteht und ein guter Stoffaustausch möglich ist.

Die Flüssigkeit wird von oben mit Hilfe eines Flüssigkeitsverteilers so auf die Gewebepackung aufgegeben, dass die Gewebelagen gleichmäßig mit Flüssigkeit benetzt werden. Die Flüssigkeit läuft dann als Film an den Gewebelagen der Gewebepackung nach unten und kann dabei intensiv mit der nach oben aufsteigenden Dampfphase in Kontakt treten. Dadurch wird ein guter Stoffaustausch zwischen den beiden Phasen erreicht. Der Flüssigkeitsverteiler ist bevorzugt so konzipiert, dass alle Gewebelagen der Gewebepackung gleichmäßig an mehreren Stellen mit Flüssigkeit beaufschlagt und benetzt werden. Praktisch erfolgt dies bevorzugt durch Verteilerrinnen mit seitlichen Öffnungen in Form z. B. von Bohrungen und

Schlitzen, durch die die Flüssigkeit austreten kann. Die Gewebepackung ist an den Verteilerrinnen des Flüssigkeitsverteilers befestigt, z. B. können die Gewebelagen der Gewebepackung am Verteiler angelötet oder angeschweißt sein. Die Befestigung der Gewebelagen an der Verteilerrinne erfolgt so, dass die Flüssigkeit aus dem Verteiler durch die Öffnungen nach außen tritt und sich dann gleichmäßig über die angeschlossene Gewebelage der Gewebepackung verteilt.

Unterhalb der Gewebepackung ist ein Flüssigkeitssammler angebracht, der bevorzugt so konzipiert ist, dass die Flüssigkeit jeder einzelnen Gewebelage vom Flüssigkeitssammler erfasst und aufgenommen wird. Dafür geeignet sind Sammlerrinnen, in denen die einzelnen Gewebelagen zusammenlaufen.

Durch die Kombination der erfindungsgemäßen Gewebepackung mit dem geschilderten Flüssigkeitsverteiler und dem geschilderten Flüssigkeitssammler wird eine Einheit geschaffen, die in Apparaten zur Stofftrennung eingesetzt wird und mit der ein sehr guter Stoffaustausch zwischen der flüssigen und der dampfförmigen Phase erzielt werden kann. Durch die Verwendung von Gewebelagen wird gewährleistet, dass der Druckverlust der Gewebepackung sehr gering ist. Die Kombination mit dem Flüssigkeitsverteiler und den Flüssigkeitssammler ermöglicht eine gesteigerte Kapazität der Gewebepackung.

Entsprechend der gegebenen Stoffaustauschaufgabe werden die Geometrie und das Packungsmaterial der erfindungsgemäßen Gewebepackung festgelegt. Metallpackungen eignen sich dabei besonders bei Trennaufgaben mit organischen Stoffgemischen, da organische Stoffe die Gewebelagen gut benetzen. Daneben spielen bei der Materialauswahl der Gewebepackung auch die Temperaturen im Apparat und z. B. das Korrosionsverhalten der organischen Medien eine wichtige Rolle. Niedrige Temperaturen, z. B. bei Absorptionsverfahren, erlauben den Einsatz von Kunstststoffpackungen. Hohe Temperaturen, z. B. bei Destillationsverfahren, erfordern den Einsatz der Gewebepackung aus Metall. Bei besonders korrosiven Stoffen empfiehlt sich der Einsatz der Gewebepackung aus Kunststoff. Es ist auch möglich, die Oberflächen der Metall- oder Kunststoff-Filamente mit einer metallischen oder keramischen Beschichtung zu versehen, z.B. beim Einsatz in einer reaktiven Destillation.

Die einzelnen Gewebelagen einer Gewebepackung werden über Distanzausprägungen in gegenseitigem Abstand zueinander gehalten, wobei die Gewebepackung insgesamt durch die Gewebelagen durchsetzende Stangen oder Drähte zusammengehalten ist. Diese Verbindungsmittel sind vorzugsweise im Randbereich einer Gewebepackung angeordnet. Denkbar ist auch, benachbarte Gewebelagen durch stoffschlüssiges Verbinden, insbesondere Schweißen, aneinander zu koppeln. Auch eine formschlüssige Verbindung durch bereichsweise Umformung, insbesondere im Randbereich der Gewebelagen ist möglich, ebenso wie eine Kombination unterschiedlicher Verbindungstechniken.

Die Erfindung wird nachfolgend anhand eines in den schematischen Zeichnungen dargestellten Ausführungsbeispiels näher erläutert. Es zeigen:
- Figur 1: in der Draufsicht eine einzelne Gewebelage eine Gewebepackung aus einem Metall- oder Kunststoff-Filament;
- Figur 2: eine Gewebepackung, zusammengesetzt aus Gewebelagen gemäß Figur 1;
- Figur 3: einen Querschnitt durch die Gewebelage der Figur 1;
- Figur 4: eine weitere Ausführungsform einer Gewebelage in der Draufsicht und
- Figuren 5a) - d): unterschiedlich konfigurierte Ausprägungen in einer Schnittdarstellung und in der Draufsicht.

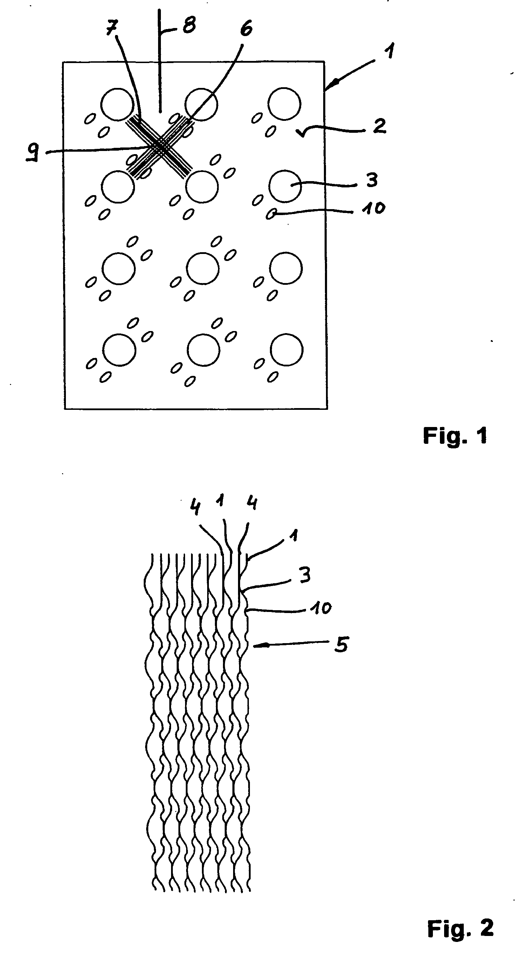

Figur 1 zeigt einen Ausschnitt einer Gewebelage 1 aus einem Metall- oder Kunststoff-Filament. Es wird lediglich ein Ausschnitt einer wesentlich größeren Gewebelage gezeigt, wobei die Geometrie dieses Ausschnitts sich über die gesamte Gewebelage 1 fortsetzt. Wesentlich bei der dargestellten Gewebelage 1 ist, dass aus einem ebenen Flächenabschnitt 2 mehrere Distanzausprägungen 3 ausgestellt sind. Alle Distanzausprägungen 3 sind gleich konfiguriert und beispielhaft in gleichmäßig beabstandeten Reihen und Spalten positioniert. Die Distanzausprägungen 3 sind dafür vorgesehen, benachbarte Gewebelagen 1, 4, so wie sie in Figur 2 dargestellt sind, bezüglich ihrer ebenen Flächenbereiche 2 in parallelem Abstand zu halten, so dass sich insgesamt die in Figur 2 auschnittsweise dargestellte Gewebepackung 5 ergibt. In Figur 2 ist ist zu erkennen, dass sämtliche Distanzausprägungen 2 einer Gewebelage 1, 4 halbkugelförmig ausgebildet sind und zu derselben Seite ausgestellt sind. Damit nicht Distanzausprägungen 3 einander benachbarter Gewebelagen 1, 4 miteinander in Eingriff gelangen, sind die Gewebelagen 1, 4 jeweils um eine halbe Spalten- und Zeilenbreite zueinander versetzt angeordnet.

Die einzelnen Gewebelagen 1, 4 sind senkrecht angeordnet, so dass eine von oben mit Hilfe eines nicht näher dargestellten Flüssigkeitsverteilers auf die Gewebepackung gegebene Flüssigkeit die einzelnen Gewebelagen 1, 4 gleichmäßig mit Flüssigkeit benetzt, die dann als Film an den Gewebelagen 1, 4 nach unten läuft und dabei intensiv mit einer nach oben aufsteigenden Dampfphase in Kontakt tritt. Die Flüssigkeit wird anschließend in einem nicht näher dargestellten Flüssigkeitssammler, der unterhalb der Gewebepackung 5 angeordnet ist aufgefangen.

Um die Benetzung der Oberfläche der Gewebelagen 1, 4 der Gewebepackung 5 zu verbessern, ist vorgesehen, Kette 6 und Schuss 7 im Winkel zu einer Vertikalen 8 verlaufen. In Figur 1 ist zu erkennen, dass Kette 6 und Schuss 7 jeweils im 45°-Winkel zur Vertikalen 8 stehen.

Darüber hinaus zeigt Figur 1, dass die Gewebelage 1 verdichtete Bereiche 9 aufweisen. Die verdichteten Bereiche 9 ergeben sich durch unterschiedliche Abstände zwischen einander benachbarten Filamenten der Kette 6 und/oder des Schusses 7. Die verdichteten Bereiche 9 sind insbesondere dort angeordnet, wo die Gewebelagen 1 höherer Belastung unterworfen ist. Das sind insbesondere diejenigen Bereiche, an denen die Distanzausprägungen 3 zur Anlage gelangen. Folglich sind bei diesem Ausführungsbeispiel die höchsten Punkte jeder Distanzausprägung 3 sowie diejenigen Bereiche, an denen eine Distanzausprägung 3 einer benachbarten Gewebelage 4 zur Anlage kommen, als verdichtete Bereiche 9 ausgestaltet.

Darüber hinaus zeigen die Figuren 1 und 2 eine Reihe von regelmäßig angeordneten, kleineren Ausprägungen, den sogenannten Lenkausprägungen 10, die lediglich beispielhaft eine elliptische Grundfläche aufweisen und dafür vorgesehen sind, den Flüssigkeitsstrom in eine bestimmte Richtung, in diesem Fall parallel zu den Kett-Filamenten 6 zu leiten. Figur 2 zeigt, dass die Lenkausprägungen 10 eine deutlich geringere Höhe besitzen als die Distanzausprägungen 3, so dass einander benachbarte Gewebelagen 1, 4 ausschließlich über die Distanzausprägungen 3 im Abstand zueinander gehalten sind.

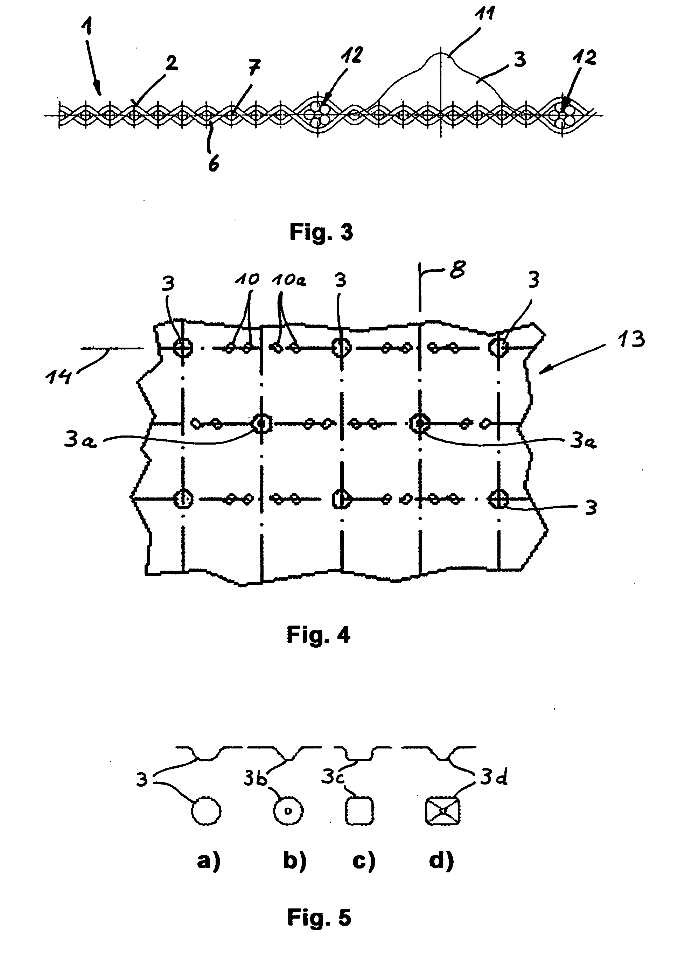

Die Querschnittdarstellung der Figur 3 zeigt eine Gewebelage 1 mit einer Distanzausprägung 3, an deren höchstem Punkt eine weitere zusätzliche kleinere Ausprägung 11 vorgesehen ist, über welche einander benachbarte Gewebelagen 1, 4 gegenseitig abgestützt sind. Die dargestellte Distanzausprägung 3 ist im Querschnitt im wesentlichen halbkugelförmig ausgebildet, wobei durch die gerundeten Übergänge zu der kleineren Ausprägung 11 an ihrem höchsten Punkt sowie zu den ebenen Flächenbereichen 2 der Gewebelage 1 sich quasi ein glockenkurvenartiger Querschnitt ergibt. Das besondere an der dargestellten Gewebelage 1 ist zudem, dass mehrere sogenannte Flüssigkeitsleitfilamente vorgesehen sind, die vorzugsweise zwischen den in den Figuren 1 und 2 dargestellten Lenkausprägungen 10 verlaufen. Die Flüssigkeitsleitfilamente 12 sind in diesem Ausführungsbeispiel im Unterschied zu den übrigen Schussfilamenten 7 und Kettfilamenten 6 multifil ausgebildet, so dass die Flüssigkeitsleitfilamente 12 insgesamt eine größere Dicke besitzen als die Schussfilamente 7 in den übrigen Bereichen der dargestellten Gewebelage 1. Dadurch ist es möglich, das Ablaufen von Flüssigkeiten an der Gewebelage 1 in gewissem Umfang zu steuern.

Figur 4 zeigt eine weitere Ausführungsform einer Gewebelage 13 - entsprechend der Darstellung der Figur 1 -, wobei auf die dort bereits eingeführten Bezugszeichen zurückgegriffen wird. Die Gewebelage 13 weist wechselseitig ausgestellte Distanzausprägungen 3, 3a auf, wobei die Distanzausprägungen 3a quasi aus der Bildebene heraustreten und die übrigen Distanzausprägungen 3 in die Bildebene hineinragen. Die Distanzausprägungen 3, 3a sind in gleichmäßig beabstandeten, horizontalen Reihen und vertikalen Spalten angeordnet, die jeweils durch strichpunktierte Linien gekennzeichnet sind. Die Ausstellungsrichtung der Distanzausprägungen 3, 3a wechselt dabei von Zeile zu Zeile bzw. von Spalte zu Spalte.

Im Unterschied zu der Ausführungsform der Figur 1 sind die dargestellten Lenkausprägungen 10, 10a nicht alle in die gleiche Richtung orientiert. Es ist zu erkennen, dass in einer Zeile jeweils zwei Lenkausprägungen 10 um - 45° gegenüber der Vertikalen 8 ausgerichtet sind, während zwei benachbart angeordnete weitere Lenkausprägungen 10a um + 45° gegenüber der Vertikalen 8 ausgerichtet sind. Auch befinden sich die Lenkausprägungen 10, 10a bei diesem Ausführungsbeispiel unmittelbar auf der horizontalen Linie 14 zwischen zwei Distanzausprägungen 3 bzw. in gleicher Weise zwischen zwei benachbarten Distanzausprägungen 3a.

Figur 5 zeigt unterschiedliche Variationen von Distanzausprägungen. Beispiel 5a) zeigt die Distanzausprägung 3, wie sie auch bei den Figuren 1, 2 und 4 zu erkennen ist. Die Distanzausprägung 3 hat die Form einer Kugelfläche, bzw. einer Kugelhaube. Das Ausführungsbeispiel gemäß Figur 5b) zeigt eine Distanzausprägung 3b in Form eines Kegelstumpfes. Die Spitze des Kegels ist abgeflacht, damit das Drahtgewebe während des Umformvorgangs nicht beschädigt wird.

Die Distanzausprägung 3c gemäß Figur 5c) ist im Querschnitt rechteckig konfiguriert und weist somit eine größere Kontaktfläche zur benachbarten Gewebelage auf als die zuvorgenannten Distanzausprägungen 3a und 3b.

Schließlich zeigt Figur 5d) eine Distanzausprägung 3d in Form eines Pyramidenstumpfes. Wie auch bei der Ausführungsform der Distanzausprägung 3b ist die Spitze der pyramidenstumpfartigen Distanzausprägung 3b abgeflacht, um den Umformvorgang zu vereinfachen. Sämtliche Arten von Distanzausprägungen 3, 3a, 3b, 3c, 3d lassen sich mit entsprechenden Umformwerkzeugen einfach und kostengünstig herstellen.

### Bezugszeichenaufstellung:

- 1 -: Gewebelage
- 2 -: ebener Flächenbereich v. 1
- 3 -: Distanzausprägung
- 3a -: Distanzausprägung
- 3b -: Distanzausprägung
- 3c -: Distanzausprägung
- 3d -: Distanzausprägung
- 4-: Gewebelage
- 5-: Gewebepackung
- 6-: Kettfilament
- 7-: Schussfilament
- 8-: Vertikale
- 9-: verdichteter Bereich
- 10-: Lenkausprägung
- 10a-: Lenkausprägung
- 11 -: Ausprägung
- 12-: Flüssigkeitsleitfilament
- 13-: Gewebelage
- 14-: Horizontale

## Patentansprüche

1. Gewebepackung, aufweisend mehrere Gewebelagen (1, 4, 13) aus einem Metall- oder Kunststoff-Filament, wobei die Gewebelagen (1, 4, 13) durch Distanzausprägungen (3) in gegenseitigem Abstand zueinander gehalten sind, wobei die Distanzausprägungen (3, 3a, 3b, 3c, 3d) muldenartig ausgedrückt sind und einander benachbarte Gewebelagen (1, 4, 13) über höchste Punkte der Distanzausprägungen (3, 3a, 3b, 3c, 3d) gegeneinander abgestützt sind, **dadurch gekennzeichnet, dass** an den Distanzausprägungen zusätzliche kleine Ausprägungen (11) vorgesehen sind, über welche einander benachbarte Gewebelagen (1, 4) gegenseitig abgestützt sind.

2. Gewebepackung nach Anspruch 1, **dadurch gekennzeichnet, dass** die Distanzausprägungen (3) im Querschnitt glockenkurvenartig ausgebildet sind.

3. Gewebepackung nach Anspruch 1, **dadurch gekennzeichnet, dass** die Distanzausprägungen (3a) halbkugelförmig ausgebildet sind.

4. Gewebepackung nach Anspruch 1, **dadurch gekennzeichnet, dass** die Distanzausprägungen (3d) pyramidenförmig ausgebildet sind.

5. Gewebepackung nach Anspruch 1, **dadurch gekennzeichnet, dass** die Distanzausprägungen in Form von Zylindern ausgebildet sind.

6. Gewebepackung nach Anspruch 1, **dadurch gekennzeichnet, dass** die Distanzausprägungen (3c) in Form von Quadern ausgebildet sind.

7. Gewebepackung nach Anspruch 1, **dadurch gekennzeichnet, dass** die Distanzausprägungen stäbchenförmig ausgebildet sind.

8. Gewebepackungen nach Anspruch 1 bis 7, **dadurch gekennzeichnet, dass** die Gewebelagen (1) Verdichtungen (9) in Kette (6) und/oder Schuss (7) im Bereich der höchsten Punkte der Distanzausprägungen (3) aufweisen.

9. Gewebepackung nach einem der Ansprüche 1 bis 8, **dadurch gekennzeichnet, dass** Kette und/oder Schuss multifil ausgebildet sind.

10. Gewebepackung nach einem der Ansprüche 1 bis 9, **dadurch gekennzeichnet, dass** die Gewebelagen (1, 4, 13) senkrecht angeordnet sind, wobei die Kette (6) und Schuss (7) im Winkel zu einer Vertikalen (8) verlaufen.

11. Gewebepackung nach einem der Ansprüche 1 bis 10, **dadurch gekennzeichnet, dass** zusätzlich zu den Distanzausprägungen (3,3a) Lenkausprägungen (10, 10a) vorgesehen sind, die eine geringere Höhe aufweisen als die Distanzausprägungen (3, 3a).

12. Gewebepackung nach einem der Ansprüche 1 bis 11, **dadurch gekennzeichnet, dass** die Lenkausprägungen (10, 10a) wechselseitig aus der Gewebelage (1, 4, 13) ausgestellt sind.

13. Gewebepackung nach einem der Ansprüche 1 bis 12, **dadurch gekennzeichnet, dass** in die Gewebelagen (1, 4, 13) als Schuss (7) oder Kette (6) mehrere Flüssigkeitsleitfilamente (12) eingewebt sind, die eine größere Dicke aufweisen als die übrigen Filamente der Gewebelage (1, 4, 13).

14. Gewebepackung nach Anspruch 13, **dadurch gekennzeichnet, dass** die Flüssigkeitsleitfilamente (12) zwischen den Lenkausprägungen (10) verlaufen.

15. Gewebepackung nach einem der Ansprüche 13 bis 14, **dadurch gekennzeichnet, dass** die Flüssigkeitsleitfilamente (13) multifil ausgebildet sind.

16. Gewebepackung nach einem der Ansprüche 1 bis 15, **dadurch gekennzeichnet, dass** die Oberfläche des Metall- oder Kunststoff-Filaments mit einer metallischen oder keramischen Beschichtung versehen ist.

17. Stoffaustauschvorrichtung, enthaltend eine Gewebepackung nach Anspruch 1 bis 16, kombiniert mit einem Flüssigkeitsverteiler und einem Flüssigkeitssammler.

18. Verfahren zur Durchführung chemischer Reaktionen oder thermischer Stofftrennungen in einem Apparat, **dadurch gekennzeichnet, dass** eine Gewebepackung nach einem der Ansprüche 1 bis 16 verwendet wird.

19. Verfahren nach Anspruch 18, **dadurch gekennzeichnet, dass** die Gewebelagen der Gewebepackung senkrecht im Apparat angeordnet sind.

20. Verfahren nach den Ansprüchen 18 oder 19, **dadurch gekennzeichnet, dass** thermische Stofftrennungen durchgeführt werden.

## Claims

1. Structured packing of woven tissue, having a plurality of woven tissue layers (1, 4, 13) composed of a metal filament or plastic filament, wherein the woven tissue layers (1, 4, 13) are held at a distance from one another by means of stamped spacer elements (3), wherein the stamped spacer elements (3, 3a, 3b, 3c, 3d) are formed by pressure in the manner of troughs and woven tissue layers (1, 4, 13) which are adjacent to one another are supported against one another by means of the highest points of the stamped spacer elements (3, 3a, 3b, 3c, 3d), **characterized in that** additional small stamped elements (11) by means of which woven tissue layers (1, 4) which are adjacent to one another are supported against one another are provided on the stamped spacer elements.

2. Structured packing of woven tissue according to Claim 1, **characterized in that** the stamped spacer elements (3) are embodied in the manner of a bell curve in cross section.

3. Structured packing of woven tissue according to Claim 1, **characterized in that** the stamped spacer elements (3a) are embodied in the manner of a hemisphere.

4. Structured packing of woven tissue according to Claim 1, **characterized in that** the stamped spacer elements (3d) are embodied in the shape of a pyramid.

5. Structured packing of woven tissue according to Claim 1, **characterized in that** the stamped spacer elements are embodied in the form of cylinders.

6. Structured packing of woven tissue according to Claim 1, **characterized in that** the stamped spacer elements (3c) are embodied in the form of right parallelepipeds.

7. Structured packing of woven tissue according to Claim 1, **characterized in that** the stamped spacer elements are embodied in the shape of small rods.

8. Structured packing of woven tissue according to Claims 1 to 7, **characterized in that** the woven tissue layers (1) have compressions (9) in warp (6) and/or weft (7) in the region of the highest points of the stamped spacer elements (3).

9. Structured packing of woven tissue according to one of Claims 1 to 8, **characterized in that** the warp and/or weft are embodied with multiple filaments.

10. Structured packing of woven tissue according to one of Claims 1 to 9, **characterized in that** the woven tissue layers (1, 4, 13) are arranged perpendicularly, wherein the warp (6) and weft (7) extend at an angle to a vertical (8).

11. Structured packing of woven tissue according to one of Claims 1 to 10, **characterized in that**, in addition to the stamped spacer elements (3, 3a), stamped guiding elements (10, 10a) are provided which have a lower height than the stamped spacer elements (3, 3a).

12. Structured packing of woven tissue according to one of Claims 1 to 11, **characterized in that** the stamped guiding elements (10, 10a) are formed alternately from the woven tissue layer (1, 4, 13).

13. Structured packing of woven tissue according to one of Claims 1 to 12, **characterized in that** a plurality of liquid guiding filaments (12), which have a greater thickness than the other filaments of the woven tissue layer (1, 4, 13), are woven into the woven tissue layers (1, 4, 13) as weft (7) or warp (6).

14. Structured packing of woven tissue according to Claim 13, **characterized in that** the liquid guiding filaments (12) extend between the stamped guiding elements (10).

15. Structured packing of woven tissue according to one of Claims 13 to 14, **characterized in that** the liquid guiding filaments (12) are embodied with multiple filaments.

16. Structured packing of woven tissue according to one of Claims 1 to 15, **characterized in that** the surface of the metal filament or plastic filament is provided with a metal or ceramic coating.

17. Device for exchanging substances, containing a structured packing of woven tissue according to Claims 1 to 16, combined with a liquid distributor and a liquid collector.

18. Method for carrying out chemical reactions or thermal separations of substances in an apparatus, **characterized in that** a structured packing of woven tissue according to one of Claims 1 to 16 is used.

19. Method according to Claim 18, **characterized in that** the woven tissue layers of the structured packing of woven tissue are arranged perpendicularly in the apparatus.

20. Method according to Claims 18 or 19, **characterized in that** thermal separations of substances are carried out.

## Revendications

1. Corps de remplissage en tissu, comportant plusieurs couches de tissu (1, 4, 13) en filament métallique ou plastique, les couches de tissu (1, 4, 13) étant maintenues à distance mutuelle les unes des autres par des empreintes d'écartement (3), dans lequel les empreintes d'écartement (3, 3a, 3b, 3c, 3d) sortent en forme de creux et les couches de tissu (1, 4, 13) voisines les unes des autres sont soutenues les unes par rapport aux autres par les points extrêmes des empreintes d'écartement (3, 3a, 3b, 3c, 3d), **caractérisé en ce que** les empreintes d'écartement présentent des petits creux supplémentaires (11) par l'intermédiaire desquels les couches de tissu (1, 4) voisines les unes des autres sont soutenues mutuellement.

2. Corps de remplissage en tissu selon la revendication 1, **caractérisé en ce que** les empreintes d'écartement (3) présentent en coupe transversale une forme de courbe en cloche.

3. Corps de remplissage en tissu selon la revendication 1, **caractérisé en ce que** les empreintes d'écartement (3a) présentent une forme hémisphérique.

4. Corps de remplissage en tissu selon la revendication 1, **caractérisé en ce que** les empreintes d'écartement (3d) présentent une forme pyramidale.

5. Corps de remplissage en tissu selon la revendication 1, **caractérisé en ce que** les empreintes d'écartement sont conçues en forme de cylindres.

6. Corps de remplissage en tissu selon la revendication 1, **caractérisé en ce que** les empreintes d'écartement (3c) sont conçues en forme de parallélépipèdes.

7. Corps de remplissage en tissu selon la revendication 1, **caractérisé en ce que** les empreintes d'écartement sont conçues en forme de baguettes.

8. Corps de remplissage en tissu selon les revendications 1 à 7, **caractérisé en ce que** les couches de tissu (1) présentent des densifications (9) dans la chaîne (6) et/ou la trame (7) dans la zone des points extrêmes des empreintes d'écartement (3).

9. Corps de remplissage en tissu selon l'une des revendications 1 à 8, **caractérisé en ce que** la chaîne et/ou la trame sont de conception multifil.

10. Corps de remplissage en tissu selon l'une des revendications 1 à 9, **caractérisé en ce que** les couches de tissu (1, 4, 13) sont disposées verticalement, la chaîne (6) et la trame (7) formant un angle par rapport à une verticale (8).

11. Corps de remplissage en tissu selon l'une des revendications 1 à 10, **caractérisé en ce que** des creux de guidage (10, 10a) présentant une hauteur inférieure aux empreintes d'écartement (3, 3a) sont prévus en plus des empreintes d'écartement (3, 3a).

12. Corps de remplissage en tissu selon l'une des revendications 1 à 11, **caractérisé en ce que** les creux de guidage (10, 10a) sont disposés de façon alternante sur la couche de tissu (1, 4, 13).

13. Corps de remplissage en tissu selon l'une des revendications 1 à 12, **caractérisé en ce que** plusieurs filaments de guidage de liquide (12) sont tissés dans les couches de tissu (1, 4, 13) en tant que trame (7) ou chaîne (6) et présentent une grosseur supérieure aux autres filaments de la couche de tissu (1, 4, 13).

14. Corps de remplissage en tissu selon la revendication 13, **caractérisé en ce que** les filaments de guidage de liquide (12) s'étendent entre les creux de guidage (10).

15. Corps de remplissage en tissu selon l'une des revendications 13 à 14, **caractérisé en ce que** les filaments de guidage de liquide (12) sont de conception multifil.

16. Corps de remplissage en tissu selon l'une des revendications 1 à 15, **caractérisé en ce que** la surface du filament métallique ou plastique est dotée d'un revêtement métallique ou céramique.

17. Dispositif de transfert de matières, comprenant un corps de remplissage en tissu selon les revendications 1 à 16, combiné à un distributeur de liquide et un collecteur de liquide.

18. Procédé de réalisation de réactions chimiques ou de séparations de matières thermiques dans un appareil, **caractérisé en ce qu'**un corps de remplissage en tissu selon l'une des revendications 1 à 16 est utilisé.

19. Procédé selon la revendication 18, **caractérisé en ce que** les couches de tissu du corps de remplissage en tissu sont disposées verticalement dans l'appareil.

20. Procédé selon les revendications 18 ou 19, **caractérisé en ce que** des séparations thermiques de matières sont réalisées.
